# EUROPEAN PATENT APPLICATION

(11) **EP 4 664 731 A1**
(43) Date of publication of application: **17.12.2025**
(21) Application number: 25152264.5
(22) Date of filing: 16.01.2025
(51) Int. Cl.: H02K 9/19, H02K 21/24, H02K 1/32, H02K 1/20, H02K 9/00

(54) **AXIAL FLUX MOTOR STRUCTURE**

(30) Priority: 14.06.2024 US 202463659843 P; 27.11.2024 CN 202411717884
(71) Applicant: Delta Electronics, Inc., Taoyuan City 333 (TW)
(72) Inventor: CHEN, Yi-No, Taoyuan 333 (TW); HSU, Tzu-Ting, Taoyuan 333 (TW)
(74) Representative: Nederlandsch Octrooibureau

(57) **Abstract**

An axial flux motor structure includes a rotor and a stator, and the stator and the rotor are at least partially overlapped in an axial direction. The stator includes a soft magnetic material body, a plurality of conductor wires, a first housing and two insulating film layers. The soft magnetic material body has a plurality of slots. The conductor wires pass through the slots in the radial direction and has a plurality of inner diameter protrusions located in an internal space of the soft magnetic material body. The first housing is located in the internal space and surrounds the inner diameter protrusions. A fluid channel through the soft magnetic material body and connected to a fluid accommodating space.

## Description

### BACKGROUND

### Field of Invention

The present disclosure relates to a motor structure, in particular to an axial flux motor structure.

### Description of Related Art

Motors are components configured to convert electrical energy into mechanical energy and have been widely used in daily life. The current axial flux motor uses distributed winding, and the conductors are routed along the circumferential slots in the stator slots according to the corresponding magnetic pole positions. The stator structure consists of multiple independent windings, so it is also called concentrated winding. A channel for cooling liquid to flow can be formed between each independent winding of the concentrated winding stator structure, and each independent winding can be immersed in the cooling liquid. However, the concentrated winding stator structure and its cooling scheme cannot be applied to the stator structure in which the soft magnetic material body and windings of each pole are connected to each other as a whole, e.g., it cannot be applied to the stator structure of distributed windings and cannot be used for cooling the conductor wires protruding from the soft magnetic material body. Therefore, another solution is needed to deal with the liquid cooling requirements of the distributed winding stator structure.

### SUMMARY

The present disclosure proposes an axial flux motor structure for overcoming or alleviating the problems of the prior art.

In one or more embodiments, an axial flux motor structure comprising: a rotor comprising two rotor bodies separated from each other; a stator located between the two separated rotor bodies and at least partially overlapped with the two separated rotor bodies in an axial direction, wherein the stator comprises: a soft magnetic material body having a plurality of slots; a plurality of conductor wires configured as a distributed winding structure and routed through the slots in a radial direction, wherein the conductor wires have a plurality of inner diameter protrusions located in an internal space of the soft magnetic material body; a first housing located in the internal space of the soft magnetic material body and surrounding the inner diameter protrusions; and a fluid channel passing through the soft magnetic material body and connected to a fluid accommodating space.

In one or more embodiments, the axial flux motor structure further comprising two insulating film layers that are at least partially attached to two end surfaces of the soft magnetic material body, and connected between the soft magnetic material body and the first housing to define the fluid accommodating space enclosing the inner diameter protrusions.

In one or more embodiments, the two insulating film layers are perpendicular to a rotation axis of the rotor.

In one or more embodiments, the fluid channel is located between two different portions of the soft magnetic material body.

In one or more embodiments, the first housing has a fluid opening on a sidewall of the first housing facing a rotation axis of the rotor.

In one or more embodiments, the axial flux motor structure further comprising a sealing sliding member located between the first housingand a shaft housing of the rotor to be fluidly-communicable with the fluid opening.

In one or more embodiments, the axial flux motor structure further comprising a second housing and a thermosetting insulating material, the second housing surrounding an outer sidewall of the soft magnetic material body, and the thermosetting insulating material is connected between the soft magnetic material body and the second housing.

In one or more embodiments, an axial flux motor structure comprising: a stator having a central shaft; a rotor comprising two rotor bodies separated from each other, the two rotor bodies being rotatably connected to the central shaft; wherein the stator is located between the two separated rotor bodies and at least partially overlapped with the two separated rotor bodies in an axial direction, wherein the stator further comprises: a soft magnetic material body having a plurality of slots; a plurality of conductor wires configured as a distributed winding structure and routed through the slots in a radial direction, wherein the conductor wires have a plurality of outer diameter protrusions exposed outside an outer diameter sidewall of the soft magnetic material body; a housing surrounding the soft magnetic material body and enclosing the outer diameter protrusions; and a fluid channel passing through the soft magnetic material body and is fluidly-communicable with a fluid accommodating space and the central shaft.

In one or more embodiments, the axial flux motor structure further comprising two insulating film layers that are at least partially attached to two end surfaces of the soft magnetic material body, and connected between the soft magnetic material body and the housing to define the fluid accommodating space enclosing the outer diameter protrusions.

In one or more embodiments, the two separated rotor bodies are rotatably connected to the central shaft by respective bearings.

The stator of the axial flux motor disclosed herein is an axial flux motor stator using distributed winding, which is composed of a body of soft magnetic material containing a plurality of fluid channels connecting between the inner diameter and the outer diameter, and the fluid channels containing cooling fluid inside which can help cooling the soft magnetic material body. The conductor winding extending out of the inner diameter cylindrical surface or the outer diameter cylindrical surface of the soft magnetic material body, and is completely covered and sealed by the housing structure and the insulating film layers attached to the axial end surface of the stator to ensure that the cooling fluid will not leak. The conductor winding extending out of the soft magnetic material body at the inner diameter or outer diameter can directly contact the cooling fluid because it is covered by the housing structure, which can help cooling the conductor winding. In addition to connecting the cooling fluid to an external circuit for circulation, it can also achieve the purpose of supporting the winding and strengthening the stator structure. In order to improve the cooling efficiency, the housing for immersing the stator winding in fluid may also be provided with one or more fluid inlets and outlets, so that the cooling fluid flows from the inner diameter to the outer diameter, or from the outer diameter to the inner diameter.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a perspective view of a stator of an axial flux motor according to an embodiment of the present disclosure;
Fig. 2 illustrates a cross-sectional view along the section line 2-2 in Fig. 1;
Fig. 3 illustrates a cross-sectional view of an axial flux motor structure according to an embodiment of the present disclosure;
Fig. 4 illustrates a cross-sectional view of an axial flux motor structure according to another embodiment of the present disclosure;
Fig. 5 illustrates a cross-sectional view of an axial flux motor structure according to still another embodiment of the present disclosure; and
Fig. 6 illustrates a cross-sectional view of an axial flux motor structure according to yet another embodiment of the present disclosure.

### DETAILED DESCRIPTION

Reference will now be made in detail to the present embodiments, examples of which are illustrated in the accompanying drawings. Wherever possible, the same reference numbers are used in the drawings and the description to refer to the same or like parts.

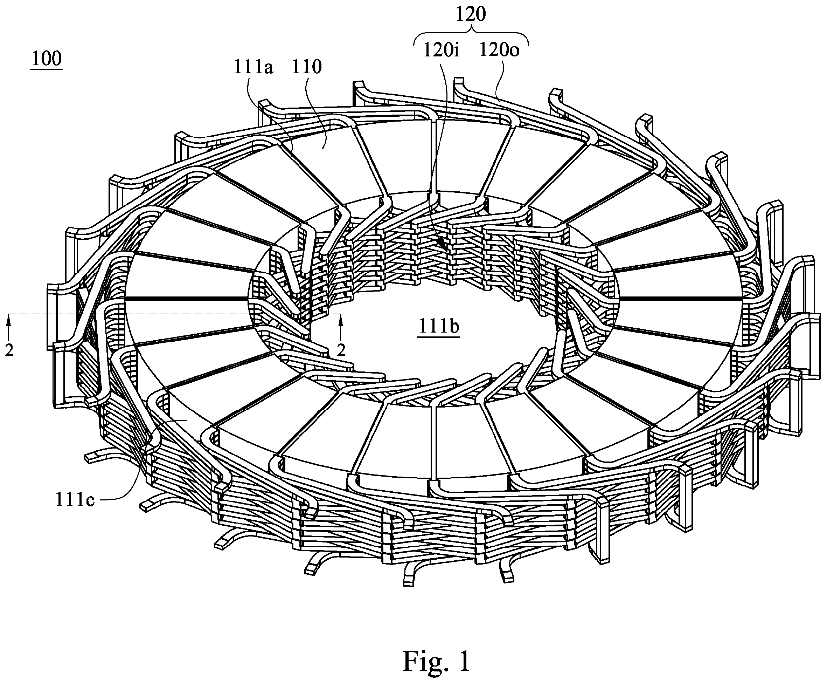

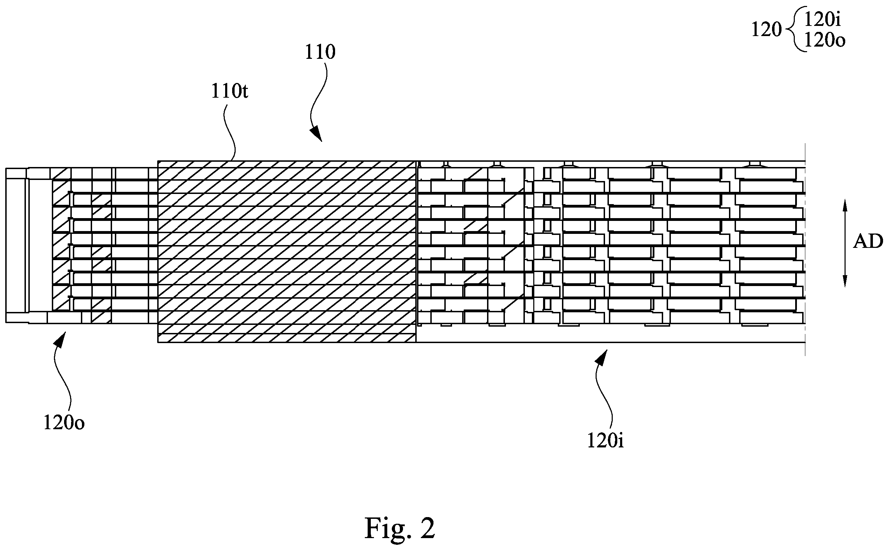

Reference is made to Figs. 1 and 2, the stator 100 includes a soft magnetic material body 110 and a plurality of conductor wires 120. The soft magnetic material body 110 has a plurality of slots 111a that are arranged around an axis of the stator 100 in a circumferential direction. In some embodiments of the present disclosure, the soft magnetic material body 110 includes 24 slots 111a for a plurality of conductor wires 120 to be routed through to form a plurality of windings, but a number of slots is not limited thereto. It should be noted that the present embodiment uses distributed windings to form a plurality of windings, but this is not intended to limit the present invention. Taking a three-phase flux motor as an example, 24 slots 111a divided by 3 (phases) can yield 8 magnetic poles. In other words, the section of the three slots forms a magnetic pole. In some embodiments of the present disclosure, multiple layers of slot-positions may be provided in the axial direction AD to wind more conductor wires to improve magnetic performance. In some embodiments of the present disclosure, each conductor wire 120 includes a plurality of inner diameter protrusions 120i and a plurality of outer diameter protrusions 120o. The inner diameter protrusions 120i are located in an internal space 111b surrounding an axis of the soft magnetic material body 110. The outer diameter protrusions 120o protrude in the radial direction and are exposed outside an outer diameter sidewall 111c of the soft magnetic material body 110. In some embodiments of the present disclosure, the soft magnetic material body 110 is formed by stacking a plurality of silicon steel sheets 110t in the axial direction AD. In some embodiments of the present disclosure, the soft magnetic material body 110 is formed by stacking a plurality of silicon steel sheets 110t in a radial direction. In some embodiments of the present disclosure, the soft magnetic material body 110 is formed by processing a soft magnetic composite material (SMC) (not shown).

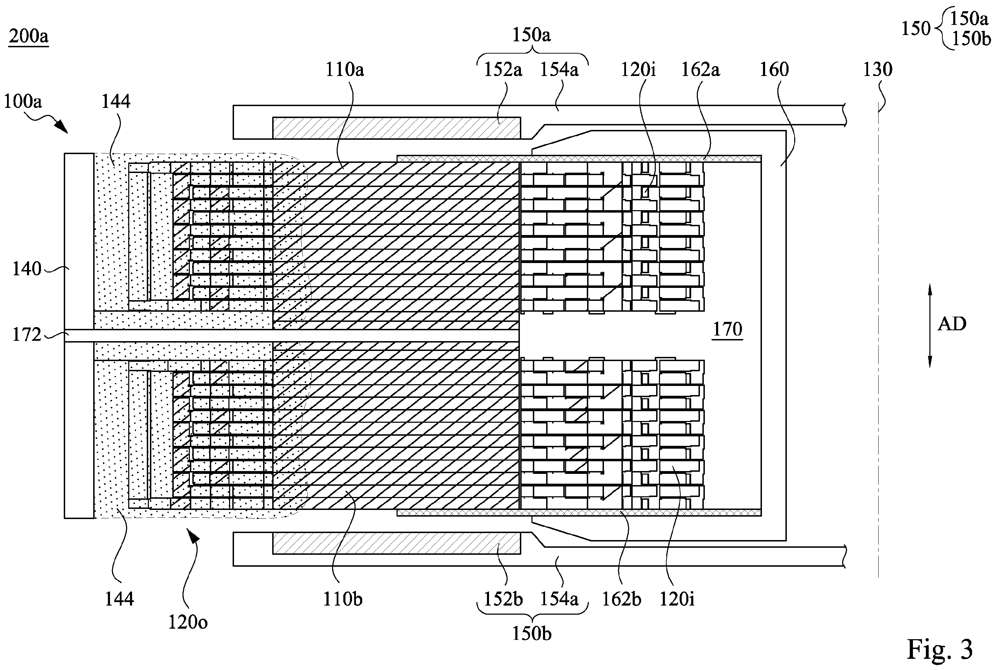

Reference is made to Fig. 3, the axial flux motor structure 200a includes a rotor 150 and a stator 100a. The stator 100a and the rotor 150 are at least partially overlapped in the axial direction AD. Under the mutual magnetic force between the rotor 150 and the stator 100a, the rotor 150 rotates relative to the stator 100a about a rotation axis 130. In some embodiments of the present disclosure, the rotor 150 includes two rotor bodies (150a, 150b) separated from each other. The rotor body 150a includes a support structure 154a and a magnet structure 152a. The magnet structure 152a is embedded in the support structure 154a. The rotor body 150b includes a support structure 154b and a magnet structure 152b. The magnet structure 152b is embedded in the support structure 154b. In some embodiments of the present disclosure, the stator 100a includes a soft magnetic material body 110, a plurality of conductor wires 120, a housing 140, and a housing 160. To facilitate the description of the configuration of the soft magnetic material body 110 and other components, symbols 110a and 110b are used to represent different portions of the soft magnetic material body 110, and are arranged, for example, in the axial direction AD and are respectively configured corresponding to the rotor bodies 150a and 150b. The soft magnetic material bodies (110a, 110b) each has a plurality of slots 111a for the conductor wires 120 to pass through radially to form a plurality of windings (referring to Figs. 1 and 2). The conductor wires 120 have a plurality of inner diameter protrusions 120i located in the internal space 111b (referring to Fig. 1) surrounding the axis of the soft magnetic material body (110a, 110b). The housing 160 is located in the internal space of the soft magnetic material body (110a, 110b) and surrounds the inner diameter protrusions 120i. The two insulating film layers (162a, 162b) are at least partially attached to the upper and lower end surfaces of the entire soft magnetic material body (110a, 110b), and are connected between the soft magnetic material body (110a, 110b) and the housing 160 to define a fluid accommodating space 170 enclosing the inner diameter protrusions 120i. The fluid accommodating space 170 is used for cooling fluid to flow in or out to directly cool the inner diameter protrusions 120i of the conductor wires 120 and the soft magnetic material bodies (110a, 110b).

In some embodiments of the present disclosure, the housing 140 surrounds the soft magnetic material body 110a. The thermosetting insulating material 144 is connected between the soft magnetic material body 110a and the housing 140, and filled between the conductor wires 120 and into the slots 111a to fix the conductor wires 120 to enhance the structural strength of the stator 100a.

In some embodiments of the present disclosure, the conductor wires 120 include a plurality of outer diameter protrusions 120o exposed outside the outer diameter sidewall of the soft magnetic material body 110a, and the thermosetting insulating material 144 is filled into the outer diameter protrusions. The thermosetting insulating material 144 is filled between the outer diameter protrusions 120o (e.g., in the gaps of the outer diameter protrusions 120o) after being hardened to secure the conductive wires 120.

In some embodiments of the present disclosure, a fluid channel 172 passes between the soft magnetic material bodies (110a, 110b) and is connected to the fluid accommodating space 170. It should be noted that the soft magnetic material bodies (110a, 110b) may be partially connected or separated from each other, depending on the configuration of the fluid channel 172. For example, more than one fluid channel 172 may be provided. The fluid channels 172 are connected to the fluid accommodating space 170 to introduce more cooling fluid, thereby enhancing the cooling efficiency of the stator 100a.

In some embodiments of the present disclosure, the two insulating film layers (162a, 162b) are perpendicular to the rotation axis 130 of the rotor 150 to prevent leakage of the cooling fluid.

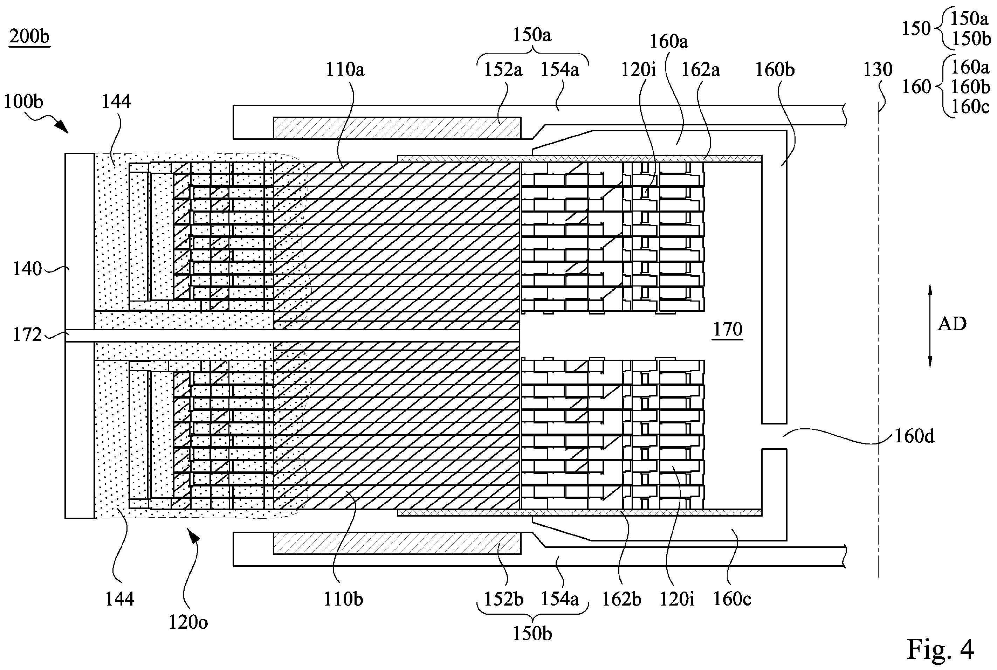

Reference is made to Fig. 4, the axial flux motor structure 200b differs from the axial flux motor structure 200a mainly in that more fluid inlets and/or outlet are added. In some embodiments of the present disclosure, the housing 160 of the stator 100b includes a top wall 160a, a side wall 160b, and a bottom wall 160c. The insulating film layer 162a is located between the soft magnetic material body 110a and the top wall 160a to form a sealed space for accommodating the cooling fluid. The insulating film layer 162b is located between the soft magnetic material body 110b and the bottom wall 160c to form a sealed space for accommodating the cooling fluid. The side wall 160b faces the rotation axis 130 of the rotor and has a fluid opening 160d. Therefore, in addition to the fluid channel 172, the fluid accommodating space 170 also has the fluid opening 160d as a channel for the cooling fluid to flow in or out, thereby improving the cooling efficiency of the inner diameter protrusion 120i (of the conductor wire 120) and the soft magnetic material body (1 10a, 1 10b).

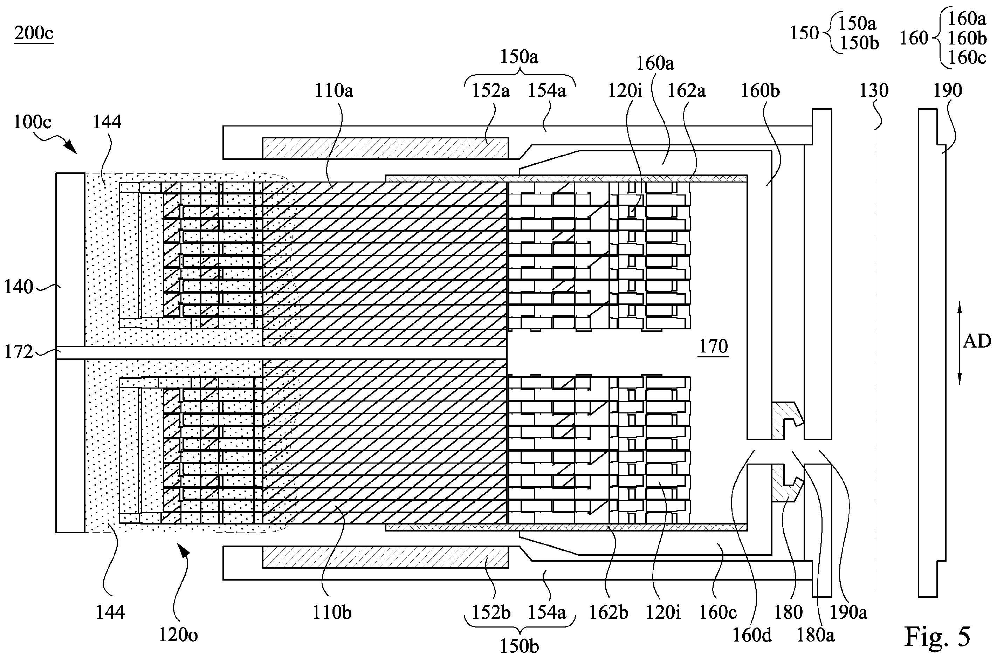

Reference is made to Fig. 5, the axial flux motor structure 200c is different from the axial flux motor structure 200b mainly in that a connection between the fluid opening 160d and the shaft housing 190 is added. A rotor body 150a is fixed to an upper end of the shaft housing 190 in the axial direction AD, and a rotor body 150b is fixed to a lower end of the shaft housing 190 in the axial direction AD, so the rotor bodies 150a and 150b separated from each other, and rotate synchronously with the shaft housing 190. In order to allow the cooling fluid to be fluidly-communicable with the external circulation system through the fluid inlet and/or outlet provided on the cylindrical surface of the housing covering the inner diameter winding, a fluid channel can be provided in the rotating shaft and between the rotating shaft housing 190 and the housing 160 of the stator 100c. One or more sealing sliding members 180 having both sealing and sliding functions are provided to prevent leakage of the cooling fluid. In some embodiments of the present disclosure, a sealing sliding member 180 is provided between the housing 160 and the shaft housing 190 of the rotor, which is fluidly-communicable with the fluid opening 160d.

In some embodiments of the present disclosure, the sealing sliding member 180 is fixed on the side wall 160b of the housing 160 and is slidably connected to an outer wall of the shaft housing 190. In other words, the shaft housing 190 rotates relative to the sealing sliding member 180. A channel 180a of the sealing sliding member 180 is connected between the fluid opening 160d and a through hole 190a of the shaft housing 190, so that a hollow flow channel of the shaft housing 190 can be fluidly-communicable with the fluid accommodating space 170.

In some embodiments of the present disclosure, the sealing sliding member 180 is an annular or O-shaped sealing member, which is located between the side wall 160b of the housing 160 and the outer wall of the shaft housing 190 to prevent the cooling fluid from leaking.

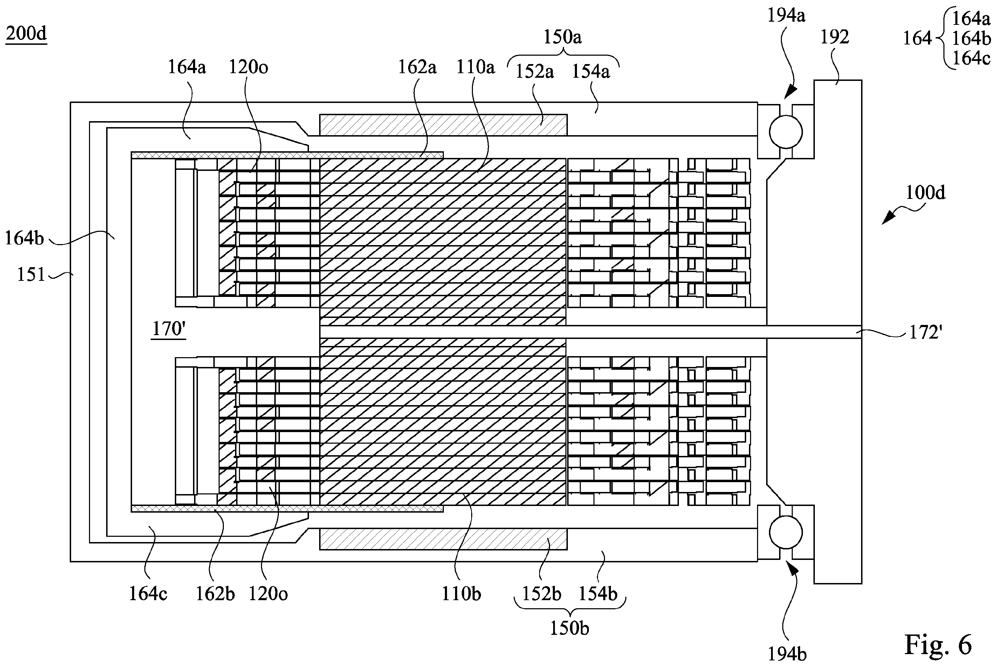

Reference is made to Fig. 6, the axial flux motor structure 200d includes a rotor 150 and a stator 100d. The stator 100d and the rotor 150 at least partially overlap in the axial direction AD. The stator 100d has a central shaft 192. The rotor 150 rotates relative to the stator 100d about the central shaft 192 under the mutual magnetic force between the rotor 150 and the stator 100d. In some embodiments of the present disclosure, the rotor 150 includes two rotor bodies (150a, 150b) separated from each other. The two rotor bodies (150a, 150b) are rotatably connected to the central shaft 192 by respective bearings (194a, 194b). The rotor body 150a includes a support structure 154a and a magnet structure 152a, wherein the magnet structure 152a is embedded in the support structure 154a. The rotor body 150b includes a support structure 154b and a magnet structure 152b, wherein the magnet structure 152b is embedded in the support structure 154b. The support structure 154a and the support structure 154b are fixedly connected by a connecting member 151 so that the rotor body 150a and the rotor body 150b can rotate synchronously. In some embodiments of the present disclosure, the stator 100a includes a soft magnetic material body 110, a plurality of conductor wires 120, and a housing 164. In order to facilitate the description of the configuration of the soft magnetic material body 110 and other components, the symbols 110a and 110b are used to represent different portions of the soft magnetic material body 110. The soft magnetic material bodies (110a, 110b) each have a plurality of slots 111a for the conductor wires 120 to pass through the radial direction to form a plurality of windings (please refer to FIGS. 1 and 2). The conductor wires 120 have a plurality of outer diameter protrusions 120o protruding and exposed outside the outer diameter side wall 111c of the soft magnetic material body 110 (referring to Fig. 1). The housing 164 surrounds the outside of the soft magnetic material body (110a, 110b) and surrounds the outer diameter protrusions 120o. The two insulating film layers (162a, 162b) are at least partially attached to the upper and lower end surfaces of the entire soft magnetic material body (110a, 110b), and are connected between the soft magnetic material body (110a, 11 0b) and the housing 164 to define a fluid accommodating space 170' enclosing the outer diameter protrusions 120o. The fluid accommodating space 170' is used for cooling fluid to flow in or out to directly cool the outer diameter protrusions 120o of the conductor wires 120 and the soft magnetic material body (110a, 110b). In some embodiments of the present disclosure, the housing 164 includes a top wall 164a, a side wall 164b, and a bottom wall 164c. An insulating film layer 162a is located between the soft magnetic material body 110a and the top wall 164a to form a sealed space for the fluid. An insulating film layer 162b is located between the soft magnetic material body 110b and the bottom wall 164c to form a sealed space for the fluid. In some embodiments of the present disclosure, the fluid channel 172' passes through the soft magnetic material body (110a, 110b) and is connected to the hollow flow channel of the fluid accommodating space 170' and the central shaft 192. In some embodiments of the present disclosure, a thermosetting insulating material is filled between the central shaft 192 and the inner diameter protrusion 120i of the conductor wire 120 to secure both.

It should be noted that the above-mentioned soft magnetic material bodies (110a, 110b) may be partially connected or separated from each other, depending on the configuration of the fluid channel 172'. For example, more than one fluid channel 172' may be provided, e.g., a plurality of fluid channels 172' may be radially arranged to communicate with the fluid accommodating space 170' so as to introduce more cooling fluid and enhance the cooling efficiency of the stator 100d.

In the above embodiment, in order to fix the insulating film layer and prevent the cooling fluid from leaking, an adhesive material may be coated between the insulating film layer and the soft magnetic material body, and then the insulating film layer can be installed.

The stator of the axial flux motor disclosed herein is an axial flux motor stator using distributed winding, which is composed of a body of soft magnetic material containing a plurality of fluid channels connecting between the inner diameter and the outer diameter, and the fluid channels containing cooling fluid inside which can help cooling the soft magnetic material body. The conductor winding extending out of the inner diameter cylindrical surface or the outer diameter cylindrical surface of the soft magnetic material body, and is completely covered and sealed by the housing structure and the insulating film layers attached to the axial end surface of the stator to ensure that the cooling fluid will not leak. The conductor winding extending out of the soft magnetic material body at the inner diameter or outer diameter can directly contact the cooling fluid because it is covered by the housing structure, which can help cooling the conductor winding. In addition to connecting the cooling fluid to an external circuit for circulation, it can also achieve the purpose of supporting the winding and strengthening the stator structure. In order to improve the cooling efficiency, the housing for immersing the stator winding in fluid may also be provided with one or more fluid inlets and outlets, so that the cooling fluid flows from the inner diameter to the outer diameter, or from the outer diameter to the inner diameter.

## Claims

1. An axial flux motor structure (200a, 200b, 200c) comprising:
a rotor (150) comprising two rotor bodies (150a, 150b) separated from each other; and
a stator (100a, 100b, 100c) located between the two separated rotor bodies (150a, 150b) and at least partially overlapped with the two separated rotor bodies (150a, 150b) in an axial direction (AD), and the stator (100a, 100b, 100c) comprising:
a soft magnetic material body (110) having a plurality of slots (111a);
a plurality of conductor wires (120) configured as a distributed winding structure and routed through the slots (111a) in a radial direction, wherein the conductor wires (120) have a plurality of inner diameter protrusions (120i) located in an internal space (111b) of the soft magnetic material body (110);
a first housing (140) located in the internal space (111b) of the soft magnetic material body (110) and surrounding the inner diameter protrusions (120i); and
a fluid channel (172) passing through the soft magnetic material body (110) and connected to a fluid accommodating space (170).

2. The axial flux motor structure (200a, 200b, 200c) of claim 1, further comprising two insulating film layers (162a, 162b) that are at least partially attached to two end surfaces of the soft magnetic material body (110), and connected between the soft magnetic material body (110) and the first housing (140) to define the fluid accommodating space (170) enclosing the inner diameter protrusions (120i).

3. The axial flux motor structure (200a, 200b, 200c) of claim 2, wherein the two insulating film layers (162a, 162b) are perpendicular to a rotation axis (130) of the rotor (150).

4. The axial flux motor structure (200a, 200b, 200c) of claim 1, wherein the fluid channel (172) is located between two different portions (110a,110b) of the soft magnetic material body (110).

5. The axial flux motor structure (200a, 200b, 200c) of claim 2, wherein the first housing (140) has a fluid opening (160d) on a sidewall of the first housing (140) facing a rotation axis (130) of the rotor (150).

6. The axial flux motor structure (200a, 200b, 200c) of claim 5, further comprising a sealing sliding member (180) located between the first housing (140) and a shaft housing (190) of the rotor (150) to be fluidly-communicable with the fluid opening (160d).

7. The axial flux motor structure (200a, 200b, 200c) of claim 6, further comprising a second housing (160) and a thermosetting insulating material (144), the second housing (160) surrounding an outer sidewall of the soft magnetic material body (110), and the thermosetting insulating material (144) is connected between the soft magnetic material body (110) and the second housing (160).

8. An axial flux motor structure (200d) comprising:
a stator (100d) having a central shaft (192); and
a rotor (150) comprising two rotor bodies (150a,150b) separated from each other, the two rotor bodies (150a, 150b) being rotatably connected to the central shaft (192);
wherein the stator (100d) is located between the two separated rotor bodies (150a, 150b) and at least partially overlapped with the two separated rotor bodies (150a, 150b) in an axial direction (AD), and the stator (100d) further comprising:
a soft magnetic material body (110) having a plurality of slots (111a);
a plurality of conductor wires (120) configured as a distributed winding structure and routed through the slots (111a) in a radial direction, wherein the conductor wires (120) have a plurality of outer diameter protrusions (120o) exposed outside an outer diameter sidewall of the soft magnetic material body (110);
a housing (164) surrounding the soft magnetic material body (110) and enclosing the outer diameter protrusions (120o); and
a fluid channel (172') passing through the soft magnetic material body (110) and is fluidly-communicable with a fluid accommodating space (170') and the central shaft (192).

9. The axial flux motor structure (200d) of claim 8, further comprising two insulating film layers (162a, 162b) that are at least partially attached to two end surfaces of the soft magnetic material body (110), and connected between the soft magnetic material body (110) and the housing (164) to define the fluid accommodating space (170') enclosing the outer diameter protrusions (120o).

10. The axial flux motor structure (200d) of claim 8, wherein the two separated rotor bodies (150a, 150b) are rotatably connected to the central shaft (192) by respective bearings (194a, 194b).

## Amended claims

### Amended claims in accordance with Rule 137(2) EPC.

1. An axial flux motor structure (200a, 200b, 200c) comprising:
a rotor (150) comprising two rotor bodies (150a,150b) separated from each other; and
a stator (100a,100b,100c) located between the two separated rotor bodies (150a,150b) and at least partially overlapped with the two separated rotor bodies (150a,150b) in an axial direction (AD), and the stator (100a,100b,100c) comprising:
a soft magnetic material body (110) having two different portions (110a,110b) that are connected in the axial direction (AD) and each portion (110a,110b) having a plurality of slots (111a);
a plurality of conductor wires (120) configured as a distributed winding structure and routed through the slots (111a) in a radial direction, wherein the conductor wires (120) have a plurality of inner diameter protrusions (120i) located in an internal space (111b) of the soft magnetic material body (110);
a first housing (160) located in the internal space (111b) of the soft magnetic material body (110) and surrounding the inner diameter protrusions (120i); and
a fluid channel (172) passing through the soft magnetic material body (110) and connected to a fluid accommodating space (170), **characterized in that**
the fluid channel (172) is located between the two different portions (110a,110b) of the soft magnetic material body (110).

2. The axial flux motor structure (200a, 200b, 200c) of claim 1, further comprising two insulating film layers (162a, 162b) that are at least partially attached to two end surfaces of the soft magnetic material body (110), and connected between the soft magnetic material body (110) and the first housing (160) to define the fluid accommodating space (170) enclosing the inner diameter protrusions (120i).

3. The axial flux motor structure (200a, 200b, 200c) of claim 2, wherein the two insulating film layers (162a, 162b) are perpendicular to a rotation axis (130) of the rotor (150).

4. The axial flux motor structure (200a, 200b, 200c) of claim 2, wherein the first housing (160) has a fluid opening (160d) on a sidewall of the first housing (160) facing a rotation axis (130) of the rotor (150).

5. The axial flux motor structure (200a, 200b, 200c) of claim 4, further comprising a sealing sliding member (180) located between the first housing (160) and a shaft housing (190) of the rotor (150) to be fluidly-communicable with the fluid opening (160d).

6. The axial flux motor structure (200a, 200b, 200c) of claim 5, further comprising a second housing (160) and a thermosetting insulating material (144), the second housing (160) surrounding an outer sidewall of the soft magnetic material body (110), and the thermosetting insulating material (144) is connected between the soft magnetic material body (110) and the second housing (160).

7. An axial flux motor structure (200d) comprising:
a stator (100d) having a central shaft (192); and
a rotor (150) comprising two rotor bodies (150a,150b) separated from each other, the two rotor bodies (150a,150b) being rotatably connected to the central shaft (192);
wherein the stator (100d) is located between the two separated rotor bodies (150a,150b) and at least partially overlapped with the two separated rotor bodies (150a,150b) in an axial direction (AD), and the stator (100d) further comprising:
a soft magnetic material body (110) having two different portions (110a,110b) that are connected in the axial direction (AD) and each portion (110a,110b) having a plurality of slots (111a);
a plurality of conductor wires (120) configured as a distributed winding structure and routed through the slots (111a) in a radial direction, wherein the conductor wires (120) have a plurality of outer diameter protrusions (120o) exposed outside an outer diameter sidewall of the soft magnetic material body (110);
a housing (164) surrounding the soft magnetic material body (110) and enclosing the outer diameter protrusions (120o); and
a fluid channel (172') passing through the soft magnetic material body (110) and is fluidly-communicable with a fluid accommodating space (170') and the central shaft (192), **characterized in that**
the fluid channel (172') is located between the two different portions (110a,110b) of the soft magnetic material body (110).

8. The axial flux motor structure (200d) of claim 7, further comprising two insulating film layers (162a, 162b) that are at least partially attached to two end surfaces of the soft magnetic material body (110), and connected between the soft magnetic material body (110) and the housing (164) to define the fluid accommodating space (170') enclosing the outer diameter protrusions (120o).

9. The axial flux motor structure (200d) of claim 7, wherein the two separated rotor bodies (150a, 150b) are rotatably connected to the central shaft (192) by respective bearings (194a, 194b).
